# EUROPÄISCHE PATENTANMELDUNG

(11) **EP 3 522 461 A1**
(43) Veröffentlichungstag der Anmeldung: **07.08.2019**
(21) Anmeldenummer: 18155232.4
(22) Anmeldetag: 06.02.2018
(51) Int. Cl.: H04L 12/735, H04L 12/721, H04L 12/725, H04L 12/911, H04L 12/913, H04L 12/927, H04L 12/40

(54) **VERFAHREN ZUM DATENTRANSFER IN EINEM ETHERNET-BASIERTEN NETZWERK MIT KOMMUNIKATIONSKNOTEN UND KOMMUNIKATIONSKNOTEN**

(71) Anmelder: Siemens Aktiengesellschaft, 80333 München (DE)
(72) Erfinder: Nguyen, An Ninh, 90427 Nürnberg (DE)

(57) **Zusammenfassung**

Bei der Erfindung mit Topologieberechnungs-Mittel (11) reservierte Übertragungskapazitäten (C₁,...,C₃) der Pfade (HW1,...,HW4) für die Hochprioren-Datenströme (HPS) als eine Reservierungsinformation (I) ermittelt und die Reservierungsinformation (I) wird bei der Berechnung der Pfade (LW1,...,LW5) für die Niederprioren-Datenströme (NPS) als Gewichtung berücksichtigt, wobei die Gewichtung auf die Pfadberechnung derart Einfluss nimmt, dass Pfade, die anhand der Reservierungsinformation (I) ersichtlich stark belegt sind, vermieden werden.

## Beschreibung

Die Erfindung betrifft ein Verfahren zum Datentransfer in einem Ethernet-basierten Netzwerk mit Kommunikationsknoten, bei dem eine Übertragungskapazität des Netzwerks kontrolliert zwischen konkurrierenden Datenströmen aufgeteilt wird, wobei der Datentransfer mit Hochprioren-Datenströmen und mit Niederprioren-Datenströmen zwischen dem Kommunikationsknoten erfolgt, wobei Topologieberechnungs-Mittel zur Berechnung von Pfaden für die Niederprioren-Datenströme genutzt werden, Pfadkontroll- und Reservierungs-Mittel genutzt werden, welche Pfade für die Hochprioren-Datenströme berechnen und bei einem Kommunikationsknoten eine Übetragungskapazität für die Hochprioren-Datenströme reservieren, Ablaufkontroll-Mittel zur Ablaufkontrolle genutzt werden und dafür sorgen, dass die Kommunikation nach einem Ablaufplan durchgeführt wird, an dem sich alle Kommunikationsknoten im Netzwerk halten, Zeitsynchronisations-Mittel zur Zeitsynchronisation genutzt werden und dafür sorgen, dass die Kommunikationsknoten, die Ablaufkontrollmittel und den Ablaufplan auf der Grundlage einer gemeinsamen Zeitbasis durchführen.

Im Rahmen der IEEE-Standardisierung wurde in der Arbeitsgruppe AVB (Audio-Video-Bridging) die Technologie Datentransfer/Ethernet um Mechanismen zur Erreichung von garantierter QoS ("Quality of Service"- auch als Dienstgüte bezeichnet) erweitert. Dabei wurde eine neue Art von Verkehr definiert, die sogenannten Streams. Ein aus dem Stand der Technik vorbekannter Stream gemäß diesen Standards stellt eine geschützte unidirektionale Kommunikationsverbindung von einem auch als Talker bezeichneten, eine Datenquelle bildenden Gerät zu einen oder mehreren auch als Listner bezeichneten, die Daten senken, also Empfänger darstellenden Gerät dar. Für jeden dieser Streams wird eine Reservierung durch ein Stream-Reservation-Protokoll (SRP) durchgeführt. Dazu benötigt jeder Stream eine eigene Adresse, um die Weiterleitung zu kontrollieren. Die Adresse wird auch als Stream-DA bezeichnet, wobei DA für Destination Address, also Zieladresse steht. Die neue Technologie wird unter dem Namen TSN (Time-Sensitive-Networking) weiterentwickelt.

Es ist bekannt, dass im Bereich der Industrie auf Ethernet mit eigenen Erweiterungen für Echtzeitsysteme zurückgegriffen wird. Hier seien beispielhaft das sogenannte Profinet RT und IRT genannt. Profinet verwendet für die Kommunikation bidirektionale Verbindungen und basiert auf Standard-Ethernet (Profinet RT) oder verwendet prioritäre Erweiterungen (Profinet IRT).

Im industriellen Umfeld und in industriellen Ethernet-basierten Netzwerken werden zunehmend die Technologie AVB bzw. TSN eingesetzt. Beispielhaft sei hier die OPC Foundation aufgezeigt und das neuartige Thema OPC UA TSN (auch OPC UA over TSN) aufgezeigt. Mit dieser Kombination mehrerer Technologien, mit denen es möglich ist, Daten in der industriellen Produktion herstellübergreifend mit einem einheitlichen, offenen Standard zu übertragen, wird es wohl zukünftig möglich sein, die Herausforderung der Industrie 4.0 und die Herausforderung an das Industrial Internet of Things zu meistern.

Auch der erst kürzlich gegründete Verein "Labs Network Industrie 4.0" (www.lni40.de) beschäftigt sich mit der Thematik TSN in die automatisierungstechnische Kommunikation einzubinden.

Die internationale Patentanmeldung WO 2016/110326 A1 beschäftigt sich ebenfalls mit der Thematik des Streamings von Audio- und Video-Daten. Die internationale Patentanmeldung WO 2017/028932 A1 beschäftigt sich mit dem Zusammenspiel von OPC-UA und der Datenkommunikation über TSN.

Die europäische Patentanmeldung EP 1 768 322 A1 zeigt ein Verfahren zur Reservierung von Bandbreite in eine Netzressource in einem Kommunikationsnetzwerk.

In TSN-Netzwerken wird die Kommunikation der Daten in verschiedene Klassen aufgeteilt. Mit der Klassifizierung werden die Datenpakete auf dem Weg von der Quelle zum Ziel, wenn sie beispielsweise in einem Bridge-Knoten weitergeleitet werden sollen, unterschiedlich bevorzugt behandelt. Beispielsweise kommen, erst wenn hochpriorisierte Datenpakete abgearbeitet sind oder deren durch eine Reservierung zugeteilten Bandbreite aufgebraucht ist, niederpriorisierte (z.B. IP Kommunikation) Datenpakete in der Bearbeitung an die Reihe.

Mit dem IEEE 802.1 Qbu Standard "Frame Preemption" Wird die Unterbrechung von nichtkritischen Frames (Streams) und die Bevorzugung von kritischen Frames (Streams) ermöglicht. Mit dem Preemptionmechanismus von TSN wird bei einer Kollision zwischen hochpriorisierten und niederpriorisierten Datenpaketen (Streams), die Bearbeitung der niederpriorisierten Datenpakete unterbrochen und das Paket in mehrere Teile aufgeteilt weitergeleitet. Der letzte Bridge-Knoten vor dem Ziel setzt die Teilpakete wieder zu einem Paket zusammen. Für den Fall, dass die Pfade für hoch- und nieder-priorisierte Datenpakete von der Quelle zum Ziel identisch sind, könnte die Verbindung der niederpriorisierten Daten gestört werden, welches sich negativ auf den Quality of Service (QoS) der Daten auswirkt.

Es ist Aufgabe der vorliegenden Erfindung in einen TSN-Netzwerk die Möglichkeit zu schaffen, ein Quality of Service von niederpriorisierten Daten zu gewährleisten, d.h. durch z.B. eine Datenreservierung für hochpriorisierte Datenströme sollen die niederpriorisierten Daten nicht unbedingt zwangsläufig gestört werden.

Die Aufgabe wird mit dem eingangs genannten Verfahren dadurch gelöst, dass die Topologieberechnungs-Mittel weiterhin derart betrieben werden, dass die reservierte Übertragungskapazität der Pfade für die Hochprioren-Datenströme als eine Reservierungsinformation ermittelt wird und die Reservierungsinformation bei der Berechnung der Pfade für die Niederprioren-Datenströme als Gewichtung berücksichtigt wird, wobei die Gewichtung auf die Pfadberechnung derart Einfluss nimmt, dass Pfade, die anhand der Reservierungsinformation ersichtlich stark belegt sind, vermieden werden.

Bisher war es noch nicht möglich in TSN-Netzwerken eine Regel oder mehrere Regeln aufzustellen, die die Pfade der verschiedenen Verbindungsklassen möglichst disjunkt gestaltet. In einem TSN-Netzwerk wird mit Hilfe von Layer 2 Protokollen (IEEE 802.2 Qca) ein logischer Pfadbaum aufgebaut und die Pfade von der Quelle zum Ziel berechnet. "Pass Control and Reservation" definiert Methoden, welche aufbauend auf IS-IS eine explizite Pfadkontrolle ermöglichen.

IS-IS (Intermediat System to Intermetiate System Protocoll) ist ein Link-State-Interior Gateway Protokoll (ähnlich OSPF), welches durch die Isonorm 10589 spezifiziert ist. Ein Link-State-Routing-Protokoll ist ein Netzwerkprotokoll das von Routern benutzt wird, um eine komplexe Datenbank mit Topologie-Informationen aufzubauen. Mit Hilfe dieser Datenbank werden die Pakete dann im Netzwerk weitergeleitet. Häufig vorkommene Vertreter dieser Protokollart im Internet sind z.B. OSPF IS-IS.

Entlang der oben genannten berechneten Pfade wird demnach mit einer Registrierung und Reservierung (IEEE 802.1 Qcc, "Stream Reservation Protocol (SRP) Enhancements and Performance Improvements" oder anders gesagt eine Verbesserung des SRP und Unterstützung von mehreren Streams gearbeitet. Demnach werden Übertragungsbandbreiten für die hochpriorisierten Verbindungen reserviert. Damit ist jeder Knoten im Netzwerk dadurch imstande, die entsprechenden Datenpakete im Hinblick auf Zeit und Richtung richtig weiterzuleiten.

Durch die Reservierung im Netzwerk ergibt sich für jede Teilstrecke eine Kenngröße, welche beschreibt wie stark diese Bandbreiten technisch ausgelastet ist.

Für niederpriorisierte Datenverbindungen wird aber ein anderer logischer Pfadbaum z.B. mit Hilfe von RSTP aufgestellt. Das Rapid Spanning Tree Protocol (RSTP) ist ein Netzprotokoll, um redundante Pfade in lokalen Netzen zu deaktivieren bzw. im Bedarfsfall (Ausfall einer Verbindung) wieder zu aktivieren. Es ist eine Weiterentwicklung des Spanning Tree Protocols (STP) und kompensiert dessen Hauptkritikpunkte. Mit dem RSTP ist sichergestellt, dass im Netzwerk von einem Punkt aus jeder andere Teilnehmer genau über einen Weg erreichbar ist. In einem stark vermaschten Netzwerk könnte RSTP mehrere Pfadbäume aufstellen. Die erfindungsgemäße Idee ist es nun, wenn in einen TSN-Netzwerk die Pfade für die niederpriorisierten Verbindungen berechnet werden sollen, so kann RSTP oder auch ein anderes Protokoll, die Reservierungsinformation bei der Pfadberechnung mit einbeziehen, damit möglichst viele Teilstrecken mit starker Belastung vermieden werden. Dadurch wird erreicht, dass für verschiedene Kommunikationsklassen unterschiedliche Wege genommen werden, um von einer Quelle zu einem Ziel zu kommen.

Zusammenfassend kann gesagt werden, dass mit RSTP die Topologie der Pfadberechnung für einen Standard-Verkehr (niederpriorisierte Datenströme) über die Topologieberechnungs-Mittel erledigt wird. Eine Bandbreiten-Reservierung für einen Stream wie es von einem Stream Reservation Protocol (SRP) bereitgestellt wird, liegt nun vor. Dabei nimmt SRP die logische Topologie, welche von IS-IS ermittelt wurde, als Basis für ihre Berechnung. Nach erfolgreicher Reservierung der Bandbreite für einen Stream steht es in SRP fest, entlang welcher IS-IS Pfade, wieviel Bandbreite für einen Stream reserviert ist. SRTP kann nun bei der Topologie-Berechnung auf die Reservierungsinformationen zurückgreifen und als Gewichtung für die Pfadberechnung mit berücksichtigen. Dabei sollen Pfade, die stark belegt sind, ersichtlich anhand der Reservierungsinformation, vermieden werden.

Die Topologieberechnungs-Mittel sind also derart ausgestaltet bzw. verfahrensgemäß dazu ertüchtigt, die Reservierungsinformation zu ermitteln und mit Hilfe eines Berechnungsmittels die Reservierungsinformation als ein Gewichtungsfaktor bei der Pfadberechnung für den eigentlichen niederprioren Datenverkehr mit einzuberechnen um ein QoS der niederpriorisierten Daten auch möglichst hoch zu halten.

Die Ablaufkontroll-Mittel sorgen, dafür dass die Kommunikation nach einem Ablaufplan durchgeführt wird, an den sich alle Knotenpunkte im Netzwerk halten. Anhand dieses Plans erfolgt die Kommunikation im gesamten Netzwerk streng konzentriert. So kann gewährleistet werden, dass einzelnen Kommunikationsströme mit unterschiedlichen Prioritäten sich gegenseitig nicht negativ beeinflussen, beispielsweise durch zusätzliche Übertragungsverzögerungen in den Warteschlangen der Ethernet Switche. Der wichtigste Mechanismus, um dies zu gewährleisten, ist der Time Aware Scheduler gemäß Standard IEEE 802.1 Qbv-2016, der mit einem Zeitschlitzverfahren arbeitet. Über die Ethernetprioritäten können unterschiedliche Kommunikationsströme unterschiedliche Zeitschlitze zugeordnet werden. Die Ablaufkontrolle nach IEEE 802.1 Qbv-2016 kann für jeden Zeitschlitz getrennt die Übertragung von Frames unterschiedlicher Priorität sperren oder erlauben.

Mechanismen zur Bandbreitenreservierung, wie sie in dem Pfad Kontroll- und Reservierungs-Mitteln implementiert sind, sowie Protokolle zur Konfiguration und Verkehrssteuerung ermöglichen dem TSN-fähigen Kommunikationsknoten die Kommunikation und Abstimmung untereinander und auch eine Abstimmung mit einem zentralen Netzwerkkonfigurationsrechner. So können für eine fehlerfreie Ablaufkontrolle notwendige Konfigurationsdaten auf alle Kommunikationsknoten ausgebracht werden. Weiterhin können Überlastszenarien, beispielsweise der Ablauf von zuviel Bandbreite auf einer Ethernet-Leitung, vorab erkannt und verhindert werden. Ein zentraler Mechanismus befindet sich bereits mit dem Projekt IEEE 802.1 Qcc in einer späten Phase der Standardisierung.

Die Zeitsynchronisations-Mittel sind mit Mechanismen zur Zeitsynchronisierung ausgestaltet, die es erlauben, in den Kommunikationsknoten die Ablaufkontrolle und Kommunikationsplanung auf der Grundlage einer gemeinsamen Zeitbasis durchzuführen. Die beste Ablaufkontrolle ist wirkungslos, wenn nicht alle Teilnehmer ihr Ablaufschema basierend auf der gleichen Uhrzeit, abarbeiten. Somit ist die Zeitsynchronisation ein essentieller Bestandteil eines jeden TSN-Ethernet-Netzwerkes. Zur Zeitsynchronisation wird üblicherweise das Precision Time Protocol gemäß Standard IEEE 1588-2008 oder eines der IEEE 1588 Profile, beispielsweise IEEE 802.1 AS rev, verwendet.

In einer weiteren Ausgestaltung des Verfahrens ist es von Vorteil, wenn die Reservierungsinformationen einer Kommunikations-Steuerungssoftware eines Kommunikationsknotens zur Überwachung der Übertragungskapazität zur Verfügung gestellt wird. Nach dem das SRP Protokoll die Pfade für die Hochprioren-Datenströme berechnet hat, übergibt es die Reservierungsinformationen der Kommunikations-Steuerungssoftware dies kann beispielsweise eine Bridge-Management-Software sein. Diese Software wird anhand der Reservierungsinformationen eine Bridge-Hardware zur Überwachung der Bandbreite an jeden einzelnen Board entsprechend einstellen. Nun ist in der Bridge-Management-Software auf jeder Bridge im Netzwerk bekannt, wie viel Brandbreite an welchen Port für welchen Stream reserviert ist. Das RSTP-Protokoll kann bei der Topologie-Berechnung der Pfade für die niederprioren Datenströme auf die Reservierungsinformation in der Bridge-Management-Software zurückgreifen und diese als Gewichtung mit berücksichtigen.

Es ist von Vorteil wenn in einen Kommunikationsknoten mehrere Ports betrieben werden.

Weiterhin ist es von Vorteil, wenn das Netzwerk als ein Time-Sensitiv-Netzwerk betrieben wird.

Im Hinblick auf die Einhaltung von QoS ist es von Vorteil, wenn in dem TSN-Netzwerk ein Hochpriorer-Datenstrom einer ersten Verbindungsklasse und ein Niederpriorer-Datenstrom einer zweiten Verbindungsklasse zugeordnet wird und disjunkte Pfade für die Verbindungsklassen berechnet werden.

Weiterhin ist es für eine echtzeitgerechte industrielle Kommunikation von Vorteil, wenn das TSN-Netzwerk als ein Kommunikationsnetz zwischen industriellen Automatisierungskomponenten genutzt wird und die Hochrioren-Datenströme für Automatisierungsanwendungen mit Echtzeitanforderungen genutzt werden und die Niederprioren-Datenströme für nichtzeitkritische Automatisierungsanwendungen genutzt werden, wobei eine Verbindungsqualität oder Dienstgüte der niederpriorisierten Kommunikationen mit den niederprioren Datenströmen durch die Nutzung der Reservierungsinformation für die Pfadberechnung erhalten bleibt.

Die eingangs genannte Aufgabe wird ebenfalls durch einen Kommunikationsknoten zum Datentransfer in einem Ethernet-basierten Netzwerk gelöst. Der Kommunikationsknoten ist ausgestaltet, eine Übertragungskapazität des Netzwerkes kontrolliert zwischen konkurrierenden Datenströmen aufzuteilen, wobei der Datentransfer mit Hochprioren-Datenströmen und mit Niederprioren-Datenströmen zwischen den Knotenpunkten erfolgt. Dazu weist der Kommunikationsknoten folgende Mittel auf:
Ein Topologie-Berechnungsmittel ausgestaltet zur Berechnung von Pfaden für die Niederprioren-Datenströme, ein Pfadkontroll- und Reservierungs-Mittel ausgestaltet, Pfade für die Hochprioren-Datenströme zu berechnen und eine auf einen jeweiligen Knotenpunkt bezogene Übertragungskapazität für die Hochprioren-Datenströme zu reservieren, ein Ablaufkontroll-Mittel ausgestaltet zur Ablaufkontrolle und zur Steuerung der Kommunikation nach einem Ablaufplan, ein Zeitsynchronisationsmittel ausgestaltet zur Zeitsynchronisation von weiteren Kommunikationsknoten, weiterhin ausgestaltet, das die Ablaufkontrolle und der Ablaufplan in den weiteren Kommunikationsknoten auf der Grundlage einer gemeinsamen Zeitbasis durchführbar ist. Erfindungsgemäß ist nun das Topologieberechnungs-Mittel weiterhin dazu ausgestaltet, die reservierte Übertragungskapazität der Pfade für die Hochprioren-Datenströme als eine Reservierungsinformation zu ermitteln und das jetzt ein Berechnungsmittel vorhanden ist, welches die Reservierungsinformation bei der Berechnung der Pfade für die Niederprioren-Datenströme als Gewichtung berücksichtigt, wobei das Berechnungsmittel derart ausgestaltet ist, dass die Gewichtung auf die Pfadberechnung derart Einfluss nimmt, dass Pfade, die anhand der Reservierungsinformation ersichtlich stark belegt sind, vermieden werden.

Die Zeichnung zeigt ein Ausführungsbeispiel des erfindungsgemäßen Verfahrens und einer erfindungsgemäßen Vorrichtung als Kommunikationsknoten. Dabei zeigt
- FIG 1: ein Ethernet-basiertes Netzwerk mit Kommunikationsknoten und
- FIG 2: einen schematisch dargestellten Kommunikationsknoten mit strukturierten Komponenten.

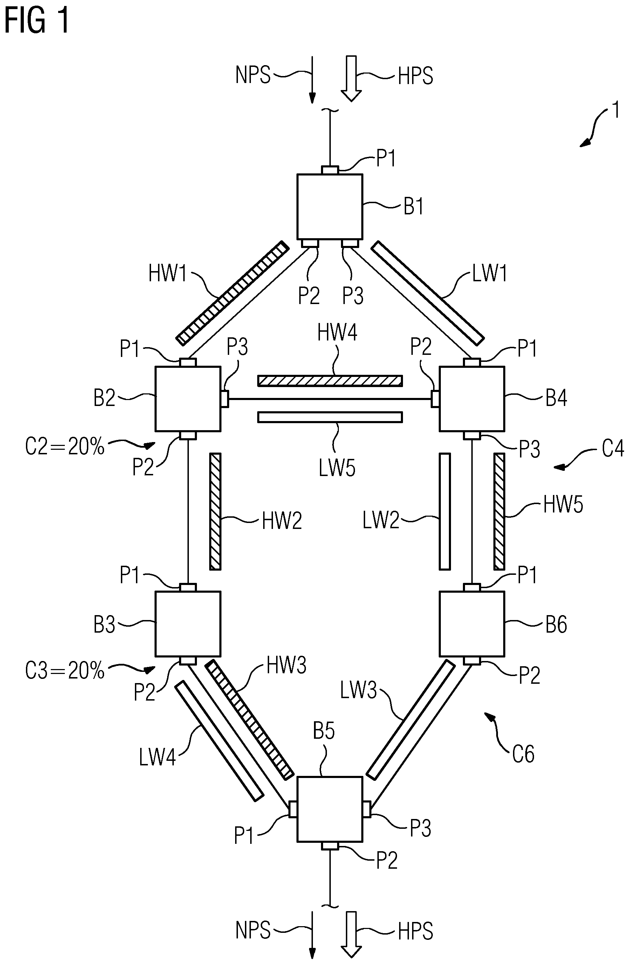

Gemäß der FIG 1 ist ein Kommunikationsnetzwerk 1 mit einem ersten Kommunikationsknoten B1, einem zweiten Kommunikationsknoten B2, einem dritten Kommunikationsknoten B3, einem vierten Kommunikationsknoten B4, einem fünften Kommunikationsknoten B5 und einem sechsten Kommunikationsknoten B6 dargestellt.

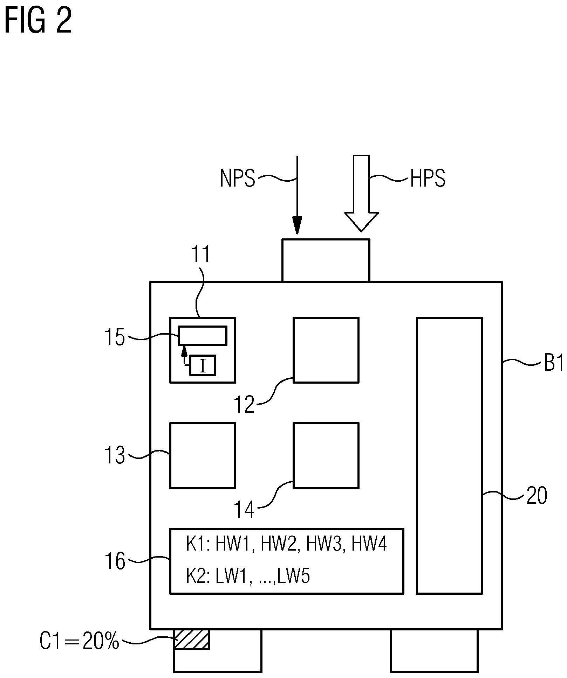

Am ersten Kommunikationsknoten B1 wird beispielsweise ein Niederpriorer-Datenstrom NPS und ein Hochpriorer-Datenstrom HPS eingespeist. Diese beiden Datenströme sollen letztendlich ihren Weg durch das Netzwerk 1 zum fünften Kommunikationsknoten B5 finden und dort weitergeleitet werden. In den in den Kommunikationsknoten B1,...,B6 vorhandenen Topologie-Berechnungsmittel 11 (siehe FIG 2) werden Pfade LW1,...,LW5 für die Niederprioren-Datenströme NPS berechnet.

Für die Hochprioren-Datenströme HPS werden u.a. mit Pfadkontroll- und Reservierungs-Mittel 12 Pfade HW1,...,HW5 berechnet. Bei der Berechnung der Pfade HW1,...,HW5 für die Hochprioren-Datenströme HPS werden mit Hilfe der Pfadkontroll- und Reservierungs-Mittel 12 Übertragungskapazitäten C1,...,C3 reserviert. In dem ersten Kommunikationsknoten B1 wird an einem zweiten Port P2 eine erste Übertragungskapazität C1 von 20% reserviert. Zwischen dem ersten Kommunikationsknoten B1 und dem zweiten Kommunikationsknoten B2 ist ein erster Kommunikationspfad für hochprioren Daten HW1 (schraffiert gezeichnet) berechnet worden. Der erste Kommunikationspfad HW1 spannt einen Pfad zwischen dem zweiten Port P2 des ersten Kommunikationsknotens B1 zu einem ersten Port P1 des zweiten Kommunikationsknoten B2 auf. Gemäß dem Topologie-Berechnungsmittel 11 soll der Hochpriore-Datenstrom HPS vom ersten Kommunikationsknoten B1 zum fünften Kommunikationsknoten B5 gelangen. Dazu wird eine Topologie für ihn berechnet über B1,B2,B3 und B5. Durch die Pfadkontroll- und Reservierungs-Mittel 12 wird für den Hochprioren-Datenstrom HPS am zweiten Port P2 des zweiten Kommunikationsknoten B2 eine zweite Übertragungskapazität C2 von 20% reserviert. Zwischen dem zweiten Kommunikationsknoten B2 und dem dritten Kommunikationsknoten B3 spannt sich zwischen dem zweiten Port P2 und dem ersten Port P1 der zweite Pfad für Hochprioren Datenströme HW2 (schraffiert) auf. Im dritten Kommunikationsknoten B3 wird für den zweiten Port P2 eine dritte Übertragungskapazität C3 von 20% für die Hochprioren-Datenströme HPS reserviert. Zwischen dem dritten Kommunikationsknoten B3 und dem fünften Kommunikationsknoten B5 spannt sich zwischen dem zweiten Port P2 und dem ersten Port P1 ein dritter Pfad für hochpriore Daten HW3 auf (schraffiert).

Da jeder Kommunikationsknoten B1,...,B6 mit jedem Komunikationsknoten B1,...,B6 kommunizieren können soll, gibt es noch weitere Pfade. Zwischen dem zweiten Kommunikationsknoten B2 und dem vierten Kommunikationsknoten B4 ist ein vierter Pfad für hochpriore Daten HW4 aufgespannt und zwischen dem vierten Kommunikationsknoten B4 und dem sechsten Kommunikationsknoten B6 ist ein fünfter Pfad für hochpriore Daten HW 5 aufgespannt.

Betrachtet man das Netzwerk 1, so ist ersichtlich, dass die linke Seite des Netzwerkes mit reservierten Übertragungskapazitäten belastet ist. Bei einer Berechnung für eine mögliche Topologie für Niederpriore-Datenströme NPS soll der linke Zweig möglichst vermieden werden.

Verfahrensgemäß wird dies nun dadurch erreicht, dass die Topologie-Berechnungsmittel 11 derart betrieben werden, dass die reservierten Übertragungskapazitäten C1,C2,C3 der Pfadstrecke HW1,HW2,HW3 als eine Reservierungsinformation I ermittelt werden und die Reservierungsinformation I bei der Berechnung der Pfade LW1,...,LW4 für die Niederprioren-Datenströme NPS als Gewichtung berücksichtigt werden. Im Idealfall wird die Topologie für die Niederprioren-Datenströme NPS derart gewählt, dass sie nicht über den linken Zweig des Netzwerkes 1 führt. Die Reservierungsinformation I wird nun bei der Pfadberechnung als Gewichtung derart Einfluss nehmen, dass die Pfade, die anhand der Reservierungsinformation I ersichtlich stark belegt sind, vermieden werden.

Demnach wird für die Niederprioren-Datenströme NPS eine Topologie über den rechten Zweig des Netzwerkes 1 gewählt bzw. berechnet. Zwischen dem ersten Kommunikationsknoten B1 und dem vierten Kommunikationsknoten B4 wird ein erster Pfad für die niederprioren Daten LW1 aufgespannt, zwischen dem vierten Kommunikationsknoten B4 und dem sechsten Kommunikationsknoten B6 wird ein zweiter Pfad für niederpriore Daten LW2 aufgespannt, zwischen dem sechsten Kommunikationsknoten B6 und dem fünften Kommunikationsknoten B5 wird ein dritter Pfad für die niederprioren Daten LW3 aufgespannt. Damit auch für die Niederprioren-Datenströme NPS jeder Kommunikationsknoten mit jedem Kommunikationsknoten kommunizieren kann, wird zusätzlich zwischen dem zweiten Kommunikationsknoten B2 und dem vierten Kommunikationsknoten B4 ein fünfter Pfad für niederpriore Daten LW5 aufgespannt und zwischen dem dritten Kommunikationsknoten B3 und dem fünften Kommunikationsknoten B5 wird ein vierter Pfad für niederpriore Daten LW4 aufgespannt.

Zusammenfassend kann gesagt werden, dass anhand des Verfahrens nun Hochpriore-Datenströme HPS über den linken Zweig des Netzwerkes 1 geführt werden und Niederpriore-Datenströme NPS über den rechten Zweig des Netzwerkes 1 geführt werden, aber dennoch beide Datenströme NPS,HPS ihr Ziel erreichen. Der Vorteil wird darin gesehen, dass bei einer Pfadberechnung der Niederprioren-Datenströme NPS nicht über eine bereits stark ausgelastete Topologie (linke Seite des Netzwerkes 1) gegangen werden muss.

Gemäß FIG 1 ist ein erster Kommunikationsknoten B1 in einer schematischen Übersicht dargestellt. Der erste Kommunikationsknoten B1 weist zur Ausführung des Verfahrens folgende Mittel auf:
Ein Topologieberechnungs-Mittel 11 ausgestaltet zur Berechnung von Pfaden LW1,...,LW5 für die Niederprioren-Datenströme NPS, ein Pfadkontroll- und Reservierungs-Mittel 12 ausgestaltet nach dem Intermediate System Intermediate System Protokoll Pfade HW1,...,HW5 für die Hochprioren-Datenströme HPS zu berechnen und eine auf den jeweiligen Knotenpunkt B1,...,B3 bezogene Übertragungskapazität C1,...,C3 für die Hochprioren-Datenströme HPS zu reservieren. Ein Ablaufkontrollmittel 13 ausgestaltet zur Ablaufkontrolle und zur Steuerung der Kommunikation nach einem Ablaufplan. Ein Zeitsynchronisations-mittel 14 ausgestaltet zur Zeitsynchronisation von weiteren Kommunikationsknoten B1,...,B6, weiterhin ausgestaltet, das die Ablaufkontrolle und der Ablaufplan in dem weiteren Kommunikationsknoten B1,...,B6 auf der Grundlage einer gemeinsamen Zeitbasis durchführbar ist.

Im besonderen sind die Topolologie-Berechnungsmittel 11 dazu ausgestaltet, die reservierte Übertragungskapazität C1,...,C3 der Pfade HW1,...,HW3 für die Hochprioren-Datenströme HPS als eine Reservierungsinformation I zu ermitteln, dabei ist ein Berechnungsmittel 15 vorhanden, welches die Reservierungsinformation I bei der Berechnung der Pfade LW1,...,LW5 für die Niederprioren-Datenströme NPS als Gewichtung berücksichtigt, wobei das Berechnungsmittel 15 derart ausgestaltet ist, das die Gewichtung auf die Pfadberechnung derart Einfluss nimmt, dass Pfade die anhand der Reservierungsinformation I ersichtlich stark belegt sind, vermieden werden.

## Patentansprüche

1. Verfahren zum Datentransfer in einem Ethernet-basierten Netzwerk (1) mit Kommunikationsknoten (B1,...,B6),
bei dem eine Übertragungskapazität des Netzwerks (1) kontrolliert zwischen konkurrierenden Datenströmen aufgeteilt wird, wobei der Datentransfer mit Hochprioren-Datenströmen (HPS) und mit Niederprioren-Datenströmen (NPS) zwischen den Kommunikationsknoten (B1,...,B6) erfolgt, wobei
- Topologieberechnungs-Mittel (11) zur Berechnung von Pfaden (LW1,...,LW5) für die Niederprioren-Datenströme (NPS) genutzt werden,
- Pfadkontroll- und Reservierungs-Mittel (12) genutzt werden, welche Pfade (HW1,...,HW4) für die Hochprioren-Datenströme (HPS) berechnen und bei einem Kommunikationsknoten (B1,...,B6) eine Übertragungskapazität (C₁,...,C₃) für die Hochprioren-Datenströme (HPS) reserviert wird,
- Ablaufkontroll-Mittel (13) zur Ablaufkontrolle genutzt werden und dafür sorgen, dass die Kommunikation nach einem Ablaufplan durchgeführt wird, an den sich alle Kommunikationsknoten (B1,...,B5) im Netzwerk (1) halten,
- Zeitsynchronisations-Mittel (14) zur Zeitsynchronisation genutzt werden und dafür sorgen, dass die Kommunikationsknoten (B1,...,B6), die Ablaufkontrolle und den Ablaufplan auf der Grundlage einer gemeinsamen Zeitbasis durchführen,
**dadurch gekennzeichnet dass**, die Topologieberechnungs-Mittel (11) weiterhin derart betrieben werden, dass die reservierte Übertragungskapazität (C₁,...,C₃) der Pfade (HW1,...,HW5) für die Hochprioren-Datenströme (HPS) als eine Reservierungsinformation (I) ermittelt wird und die Reservierungsinformation (I) bei der Berechnung der Pfade (LW1,...,LW5) für die Niederprioren-Datenströme (NPS) als Gewichtung berücksichtigt wird, wobei die Gewichtung auf die Pfadberechnung derart Einfluss nimmt, dass Pfade, die anhand der Reservierungsinformation (I) ersichtlich stark belegt sind, vermieden werden.

2. Verfahren nach Anspruch 1, wobei die die Reservierungsinformation (I) einer Kommunikationsknoten-Steuerungssoftware (20) eines Kommunikationsknoten (B1,...,B6) zur Überwachung der Übertragungskapazität (C₁,...,C₃) zur Verfügung gestellt wird.

3. Verfahren nach Anspruch 2, wobei in einem Kommunikationsknoten (B1,...,B5) mehrere Ports (P) betrieben werden.

4. Verfahren nach einem der Ansprüche 1 bis 3, wobei das Netzwerk (1) als ein Time-Sensitive-Netzwerk betrieben wird.

5. Verfahren nach Anspruch 4, wobei in dem Time-Sensitive-Netzwerk ein Hochpriorer-Datenstrom (HPS) eine erste Verbindungsklasse (K1) und ein Niederpriorer-Datenstrom (NPS) einer zweiten Verbindungsklasse (K2) zugeordnet wird und disjunkte Pfade für die Verbindungsklassen (K1,K2) berechnet werden.

6. Verfahren nach einem der Ansprüche 4 oder 5, wobei das Time-Sensitive-Netzwerk als ein Kommunikationsnetz zwischen industriellen Automatisierungskomponenten genutzt wird und die Hochprioren-Datenströme (HPS) für Automatisierungsanwendungen mit Echtzeitanforderungen genutzt werden und die Niederprioren-Datenströme (NPS) für nicht zeitkritische Automatisierungsanwendungen genutzt werden, wobei eine Verbindungsqualität oder Dienstgüte (QoS) der niederpriorisierten Kommunikationen mit den Niederprioren-Datenströmen (NPS) durch die Nutzung der Reservierungsinformation (I) für die Pfadberechnung erhalten bleibt.

7. Kommunikationsknoten (B1) zum Datentransfer in einem Ethernet-basierten Netzwerk (1) ausgestaltet eine Übertragungskapazität des Netzwerks (1) kontrolliert zwischen konkurrierenden Datenströmen aufzuteilen, wobei der Datentransfer mit Hochprioren-Datenströmen (HPS) und mit Niederprioren-Datenströmen (NPS) zwischen den Knotenpunkten (B1,...,B6) erfolgt, aufweisend:
- ein Topologieberechnungs-Mittel (11) ausgestaltet zur Berechnung von Pfaden (LW1,...,LW5) für die Niederprioren-Datenströme (NPS),
- ein Pfadkontroll- und Reservierungs-Mittel (11) ausgestaltet Pfade (HW1,...,HW5) für die Hochprioren-Datenströme (HPS) zu berechnen und eine auf einen jeweiligen Knotenpunkt (B1,...,B6) bezogene Übertragungskapazität (C₁,...,C₃) für die Hochprioren-Datenströme (HPS) zu reservieren,
- ein Ablaufkontroll-Mittel (13) ausgestaltet zur Ablaufkontrolle und zur Steuerung der Kommunikation nach einem Ablaufplan,
- Zeitsynchronisations-Mittel (14) ausgestaltet zur Zeitsynchronisation von weiteren Kommunikationsknoten (B1,...,B6), weiterhin ausgestaltet, das die Ablaufkontrolle und der Ablaufplan in den weiteren Kommunikationsknoten (B1,...,B6) auf der Grundlage einer gemeinsamen Zeitbasis durchführbar ist,
**dadurch gekennzeichnet dass**, das Topologieberechnungs-Mittel (11) weiterhin dazu auegestaltet ist, die reservierte Übertragungskapazität (C₁,...,C₃) der Pfade (HW1,...,HW6) für die Hochprioren-Datenströme (HPS) als eine Reservierungsinformation (I) zu ermitteln und ein Berechnungsmittel (15) vorhanden ist, welches die Reservierungsinformation (I) bei der Berechnung der Pfade (LW1,...,LW45 für die Niederprioren-Datenströme (NPS) als Gewichtung berücksichtigt, wobei das Berechnungsmittel (15) derart ausgestaltet ist, dass die Gewichtung auf die Pfadberechnung derart Einfluss nimmt, dass Pfade, die anhand der Reservierungsinformation (I) ersichtlich stark belegt sind, vermieden werden.
